Europäisches Patentamt

European Patent Office

Office européen des brevets

(19)

(11) Veröffentlichungsnummer : **0 089 411**
**B1**

(12) **EUROPÄISCHE PATENTSCHRIFT**

(45) Veröffentlichungstag der Patentschrift :
05.06.85

(21) Anmeldenummer : **82111068.1**

(22) Anmeldetag : **30.11.82**

(51) Int. Cl.⁴ : **A 62 B   9/00, G 01 L   7/16**

(54) **Druckanzeigegerät für Atemschutzgeräte.**

(30) Priorität : **17.03.82 DE 3209601**

(43) Veröffentlichungstag der Anmeldung :
**28.09.83 Patentblatt 83/39**

(45) Bekanntmachung des Hinweises auf die Patenterteilung : **05.06.85 Patentblatt 85/23**

(84) Benannte Vertragsstaaten :
**AT CH FR GB LI NL SE**

(56) Entgegenhaltungen :
**DE-A- 2 441 380
DE-B- 1 163 153
DE-C-   740 969
DE-C-   893 750
DE-C- 1 299 533
GB-A- 1 285 269
US-A- 2 948 256**

(73) Patentinhaber : **Drägerwerk Aktiengesellschaft
Moislinger Allee 53-55
D-2400 Lübeck 1 (DE)**

(72) Erfinder : **Schwartz, Willi
Reecker Hauptstrasse 5
D-2400 Lübeck 1 (DE)**

EP 0 089 411 B1

Jouve, 18, rue St-Denis, 75001 Paris, France

## Beschreibung

Die Erfindung betrifft ein Druckanzeigegerät für Atemschutzgeräte mit einer Anzeige für unterschiedliche Druckstufen eines unterteilten Meßbereiches, entsprechend dem Oberbegriff des Patentanspruchs 1.

Atemschutzgeräte mit das Atemgas enthaltenden Druckgasbehältern sind mit einem Druckmeßgerät ausgerüstet, mit dem der Druck in denselben und damit auch der Atemgasvorrat überwacht werden kann. Diese Überwachung muß auch in dunklen Räumen oder in großer Tiefe im Wasser möglich sein.

Ein bekanntes Druckanzeigegerät für Atemschutzgeräte enthält neben einem Zeigergerät im gleichen Gehäuse einen weiteren, vom selben Druck beaufschlagten Anzeiger. Er ist ein unter Federdruck stehender verschiebbarer Kolben, der einen nach außen ragenden Anzeigestift besitzt. Der Anzeigestift ist mit Erhöhungen oder Vertiefungen, wie Rillen, versehen, die den Druckstufen entsprechen. Sie können durch Tasten erkannt werden. Dies ist auch in der Dunkelheit oder unter Wasser möglich. Da der Hub des Anzeigestiftes jedoch gering ist, liegen die Marken so eng beieinander, daß ein sicheres Erkennen nicht möglich ist und Irrtümer nicht ausgeschlossen sind. Dies gilt vor allem, wenn mit Handschuhen gearbeitet wird (DE-PC-S-12 99 533).

Aufgabe der Erfindung ist ein Druckanzeigegerät für Atemschutzgeräte, mit dem der im Druckgasbehälter vorhandene Druck auch bei Dunkelheit durch Tasten sicher erkannt werden kann.

Die Lösung der Aufgabe erfolgt gemäß dem Kennzeichen des Patentanspruchs 1. Vorteilhafte Weiterbildungen sind in den abhängigen Ansprüchen beschrieben.

Die in den Druckstufen vorhandenen Taststifte ermöglichen für den Benutzer bei völliger Dunkelheit auch mit Handschuhen ein sicheres Abtasten. Er stellt fest, welche Taststifte bereits in das Gehäuse eingetreten sind und kennt dann seinen Druckgasvorrat. Auch starke Verschmutzungen wirken dabei nicht störend.

Ein Ausführungsbeispiel der Erfindung ist in der Zeichnung dargestellt und wird im folgenden beschrieben. Es zeigen

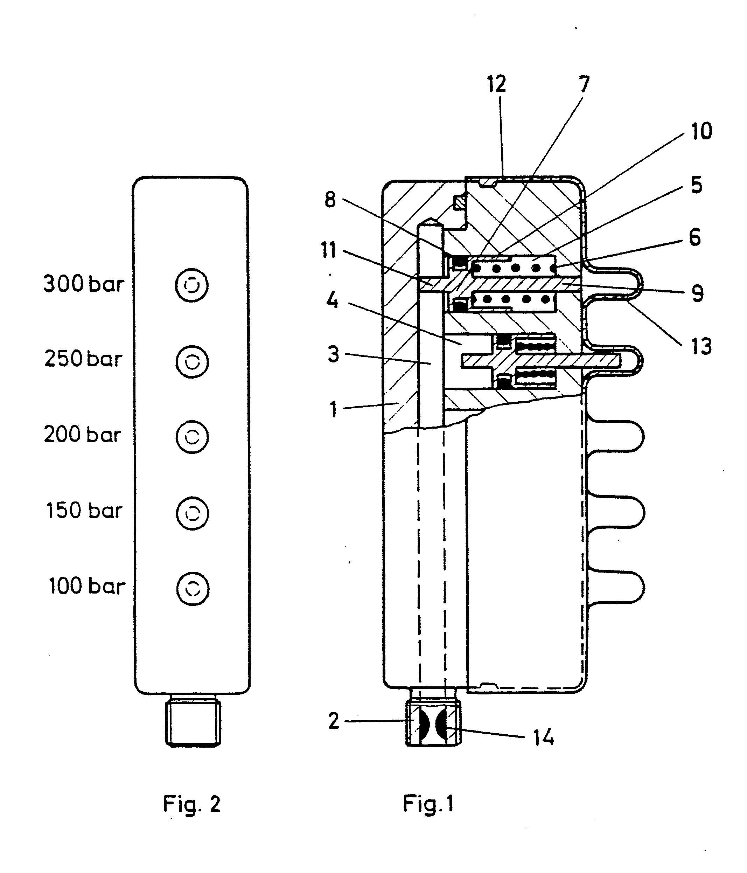

Figur 1 das Druckanzeigegerät im Längsschnitt,

Figur 2 das Druckanzeigegerät in der Ansicht.

Das Gehäuse 1 enthält einen über einen Anschluß 2 mit dem Druckbehälter zu verbindenden Druckraum 3. Mit dem Druckraum 3 sind Kolbendruckmesser 4 für die festzustellenden Druckstufen verbunden. Es sind Zylinder 5, in denen über Druckfedern 6 gespannte Druckkolben 7 dicht geführt sind. Sie sind dazu über Dichtringe 8 abgedichtet. Die Druckkolben 7 besitzen Taststifte 9. Diese sind bei entspannter Druckfeder 6 ganz in das Gehäuse 1 hineingezogen, bei gespannter Druckfeder 6 jedoch zum Abtasten herausgetreten. Der Weg des Druckkolbens 7 wird bei gespannter Druckfeder 6 durch eine Verlängerung 10, bei entspannter Druckfeder 6 durch einen Anschlag 11 begrenzt.

Eine Haube 12 aus einem elastischen Material schützt die Kolbendruckmesser 4 vor Verschmutzungen. Noppen 13 nehmen die Taststifte 9 auf.

Eine Drossel 14 im Anschluß 2 begrenzt bei Undichtheit im Gehäuse 1 die Druckgasmenge. Die Druckstufen, also die zu überwachenden Druckwerte, werden durch die den Gegendruck ausübenden unterschiedlichen Druckfedern 6 bestimmt. Die Federkräfte sind jeweils dem unteren und oberen Grenzwert der zu überwachenden Druckstufe angepaßt. Damit ist z. B. bei einem Druck von 250 bar der Taststift 9 des Druckkolbens 7 für die Druckstufe 250 bis 300 bar mit entspannter Druckfeder 6 bis zur Begrenzung durch den Anschlag 11 ganz in das Gehäuse 1 hineingezogen. Gleichzeitig ist der Druckkolben 7 für die Druckstufe 200 bis 250 bar bei gespannter Druckfeder 6, in seinem Weg begrenzt durch die Verlängerung 10, noch ganz in den Zylinder 5 hineingedrückt und der Taststift 9 damit ganz aus dem Gehäuse 1 herausgetreten in den Noppen 13 enthalten. Durch Abtasten und Andrücken der Noppen 13 läßt sich das Vorhandensein von Taststiften 9 vom Träger des Atemschutzgerätes leicht feststellen.

## Patentansprüche

1. Druckanzeigegerät für Atemschutzgeräte mit einer Anzeige für unterschiedliche Druckstufen eines unterteilten Meßbereiches durch in dem Gehäuse (1) angeordneten, mit einem Taststift (9) nach außen ragenden, unter Federdruck stehenden und mit dem Druckraum (3) verbundenen Druckkolben (7), dadurch gekennzeichnet, daß es für jede Druckstufe des unterteilten Meßbereiches einen Druckkolben (7) mit unterschiedlichen Druckfedern (6) gibt, deren entspannte Federlänge, also mit hineingezogenem Taststift (9), der unteren Grenze der Druckstufe, und deren gespannte Federlänge, also mit herausgedrücktem Taststift (9), der oberen Grenze der Druckstufe entspricht.

2. Druckanzeigegerät für Atemschutzgeräte nach Anspruch 1, dadurch gekennzeichnet, daß der Weg des Druckkolbens (7) bei gespannter Druckfeder (6) durch eine Verlängerung (10) und bei entspannter Druckfeder (6) durch einen Anschlag (11) begrenzt ist.

3. Druckanzeigegerät für Atemschutzgeräte nach Anspruch 1 und 2, dadurch gekennzeichnet, daß die Druckkolben (7) in einer Reihe für Druckstufen nach steigenden Drücken hintereinander angeordnet sind.

4. Druckanzeigegerät für Atemschutzgeräte

.nach Anspruch 1 bis 3, dadurch gekennzeichnet, daß das Gehäuse (1) durch eine Haube (12) mit einer Noppe (13) für jeden Taststift (9), die den heraustretenden Taststift (9) aufnimmt, dicht abgedeckt ist.

5. Druckanzeigegerät für Atemschutzgeräte nach Anspruch 1 bis 4, dadurch gekennzeichnet, daß, zur Begrenzung der Druckgasmenge bei undichtem Gehäuse (1), eine Drossel (14) im Anschluß (2) angeordnet ist.

## Claims

1. Pressure indicating apparatus for respiratory apparatus, having an indicator for indicating different pressure ranges of a divided measuring scale by means of a piston (7) which is arranged in a housing (1) and which is under spring pressure, the piston being in communication with a pressure chamber and having an outwardly projecting measuring region, characterised in that for each pressure range of the divided measuring scale there is a respective piston (7) with an associated respective spring (6) whose released spring length, that is with measuring region (9) retracted, corresponds to the lower limit of the pressure range and whose spring length under tension, that is with measuring region (9) pushed out, corresponds to the upper limit of the pressure range.

2. Pressure indicating apparatus for respiratory apparatus, according to claim 1, characterised in that movement of the pressure piston (7) is restricted by an extended portion (10) when the pressure spring (6) is under tension and by a stop (11) when the pressure spring (6) is released.

3. Pressure indicating apparatus for respiratory apparatus, according to claim 1 or 2, characterised in that the pressure pistons (7) are arranged successively in a row for indicating pressure ranges in accordance with increasing pressure.

4. Pressure indicating apparatus for respiratory apparatus, according to (any one of) claim(s) 1 to 3, characterised in that the housing (1) is tightly closed by a cap (12) provided with a respective receiving region (13) for each measuring region (9), which receives the pushed out measuring region (9).

5. Pressure indicating apparatus for respiratory apparatus, according to (any one of) claim(s) 1 to 4, characterised in that a throttle (14) is arranged in a connection (2) (to the pressure chamber) in order to limit the volume of pressurised gas in the event of a leak in the housing (1).

## Revendications

1. Indicateur de pression pour appareil de protection respiratoire du type comportant un indicateur, pour différents étages de pression d'un domaine de mesure subdivisé, formé par un piston de pression (7) disposé dans le boîtier (1), en étant relié à l'espace sous pression (3) et soumis à la pression d'un ressort, saillant vers l'extérieur et muni d'un palpeur (9), caractérisé en ce qu'il est prévu un piston de pression (7) avec un ressort de pression distinct (6) pour chaque étage de pression du domaine de mesure subdivisé, en ce que la longueur de chaque ressort lorsqu'il est détendu, donc avec le palpeur (9) rentré à l'intérieur, correspond à la limite inférieure de l'étage de pression, et en ce que la longueur de chaque ressort lorsqu'il est bandé, et donc avec le palpeur (9) sorti à l'extérieur, correspond à la limite supérieure de l'étage de pression.

2. Indicateur de pression pour appareils de protection respiratoire selon la revendication 1, caractérisé en ce que la course du piston de pression (7) est limitée par un prolongement (10) lorsque le ressort (6) est bandé et par un ergot (11) lorsque le ressort (6) est détendu.

3. Indicateur de pression pour appareils de protection respiratoire selon l'une des revendications 1 ou 2, caractérisé en ce que les pistons de pression (7) sont disposés en rangée de façon que les palpeurs se trouvent l'un après l'autre avec les pressions croissantes.

4. Indicateur de pression pour appareils de protection respiratoire selon l'une quelconque des revendications 1 à 3, caractérisé en ce que le boîtier (1) est recouvert de façon étanche par une enveloppe (12) comportant, pour chaque palpeur (9), un doigt (13), qui est apte à recevoir le palpeur (9) associé lorsqu'il est sorti.

5. Indicateur de pression pour appareils de protection respiratoire selon l'une quelconque des revendications 1 à 4, caractérisé en ce que la limitation de la quantité de gaz sous pression entrant dans le boîtier (1) lorsqu'il y a des fuites dans celui-ci est assurée par un étranglement (14) dans le raccord (2).

0 089 411

300 bar

250 bar

200 bar

150 bar

100 bar

Fig. 2

Fig. 1

1